# EUROPEAN PATENT APPLICATION

(11) **EP 3 974 134 A2**
(43) Date of publication of application: **30.03.2022**
(21) Application number: 21197875.4
(22) Date of filing: 21.09.2021
(51) Int. Cl.: B27N 1/00, B27N 3/00, B27N 3/04, B27N 3/18, B27N 5/00, C08L 97/02, D04H 1/732, D21B 1/06

(54) **FIBER STRUCTURAL BODY AND MANUFACTURING APPARATUS FOR THE SAME**

(30) Priority: 23.09.2020 JP 2020158308
(71) Applicant: Seiko Epson Corporation, Tokyo 160-8801 (JP)
(72) Inventor: FUJITA, Tetsuji, Suwa-shi, 392-8502 (JP); TAKIZAWA, Jun, Suwa-shi, 392-8502 (JP); OMURA, Makoto, Suwa-shi, 392-8502 (JP); ITO, Akio, Suwa-shi, 392-8502 (JP)
(74) Representative: Miller Sturt Kenyon

(57) **Abstract**

A fiber structural body includes cellulose fibers and a binding material which binds the cellulose fibers, the cellulose fibers are contained at a content of 50.0 to 70.0 percent by mass with respect to the fiber structural body, and the binding material is a natural component.

## Description

The present application is based on, and claims priority from JP Application Serial Number 2020-158308, filed September 23, 2020, the disclosure of which is hereby incorporated by reference herein in its entirety.

### BACKGROUND

### 1. Technical Field

The present disclosure relates to a fiber structural body and a manufacturing apparatus for the same.

### 2. Related Art

In recent years, packing materials and buffer materials which are configured to reduce environmental loads have been desired instead of plastic materials. Heretofore, a processing method in which waste paper is reused has been known. For example, JP-A-9-296398 has proposed a processing method in which waste paper is pulverized into fibers and is then processed by molding using a polypropylene or a vinyl acetate emulsion as a fixing material. In addition, JP-A-2002-172728 has proposed a processing method in which a shellac resin, that is, a biologically produced natural resin obtained by refining of an acid ester material secreted from coccids, is applied on one surface or two surfaces of a paper substrate so as to form a packing material.

However, in the processing method disclosed in JP-A-9-296398, since the fixing material is not a nature derived material, the reduction in environmental loads is not sufficient. In the processing method disclosed in JP-A-2002-172728, although the shellac resin is dissolved in water, an alcohol, or the like and is then applied to the paper substrate so as to enhance water resistance and oil resistance, the strength of the packing material has not been discussed. Hence, a fiber structural body which further reduces environmental loads and which can obtain a strength enough as the buffer material has been required.

### SUMMARY

According to an aspect of the present disclosure, there is provided a fiber structural body comprising: cellulose fibers; and a binding material which binds the cellulose fibers. In the fiber structural body described above, the cellulose fibers are contained at a content of 50.0 to 70.0 percent by mass with respect to the fiber structural body, and the binding material is a natural component.

In the fiber structural body described above, the binding material may include a shellac resin.

In the fiber structural body described above, the binding material may include a thermoplastic starch.

In the fiber structural body described above, the fiber structural body may have a thickness of 1.0 to 20.0 mm and a density of 0.02 to 0.50 g/cm³.

According to another aspect of the present disclosure, there is provided a manufacturing apparatus for a fiber structural body, the apparatus comprising: a mixing portion of mixing cellulose fibers and a binding material which binds the cellulose fibers; a depositing portion of depositing the cellulose fibers and the binding material which are mixed together; and a forming portion of heating a deposit deposited in the depositing portion to form a fiber structural body, and the forming portion includes a heating section and a pressurizing section.

In the manufacturing apparatus described above, the heating section may increase a heating temperature to 140°C to less than 200°C.

In the manufacturing apparatus described above, the pressurizing section may increase a pressure to 0.1 kPa to 10.0 MPa.

### BRIEF DESCRIPTION OF THE DRAWINGS

FIG. 1 is a schematic view showing one example of a manufacturing apparatus for a fiber structural body according to an embodiment.
FIG. 2A is a view showing one example of a molding die for the fiber structural body according to the embodiment.
FIG. 2B is a view showing one example of the molding die for the fiber structural body according to the embodiment.
FIG. 2C is a view showing one example of the molding die for the fiber structural body according to the embodiment.
FIG. 2D is a view showing one example of the molding die for the fiber structural body according to the embodiment.
FIG. 3 is an image of buffer materials obtained from the fiber structural body according to the embodiment.
FIG. 4 is an image of one buffer material obtained from the fiber structural body according to the embodiment.

### DESCRIPTION OF EXEMPLARY EMBODIMENTS

Hereinafter, embodiments of the present disclosure will be described. The following embodiments are each described by way of example to explain the present disclosure. The present disclosure is not limited to the following embodiments and may be variously changed and/or modified without departing from the scope of the present disclosure. In addition, all structures described below are each not always required to be an essential structure of the present disclosure.

### 1. Fiber Structural Body

A fiber structural body of this embodiment contains cellulose fibers and a binding material which binds the cellulose fibers. In addition, the cellulose fibers are contained at a content of 50.0 to 70.0 percent by mass with respect to the fiber structural body, and the binding material is a natural component. Hereinafter, the cellulose fibers, the binding material, properties of the fiber structural body will be sequentially described.

### 1.1. Cellulose Fibers

In the fiber structural body of this embodiment, the cellulose fibers are used as a part of a raw material, and a plurality of cellulose fibers is contained in the fiber structural body. As the cellulose fibers described above, for example, there may be mentioned natural cellulose fibers (animal cellulose fibers and plant cellulose fibers) and chemical cellulose fibers (organic cellulose fibers, inorganic cellulose fibers, and organic-inorganic composite cellulose fibers). In more particular, as the cellulose fibers, for example, cellulose fibers formed from a cellulose, a cotton, a hemp, a kenaf, a flax, a ramie, a jute, a Manila hemp, a Sisal hemp, a coniferous tree, or a broadleaf tree may be mentioned; those cellulose fibers may be used alone, or at least two types thereof may be appropriately used in combination; and those cellulose fibers may be used as regenerated cellulose fibers, for example, after being refined. In addition, the cellulose fibers may be dried, may contain a liquid, such as water or an organic solvent, or may be impregnated therewith. Furthermore, the cellulose fibers may be processed by various types of surface treatments.

When one cellulose fiber of the cellulose fibers contained in the fiber structural body of this embodiment is regarded as one independent cellulose fiber, the average diameter (if the cross-section thereof is not a circle, the maximum length among lengths in a direction orthogonal to a longitudinal direction or a diameter (equivalent circle diameter) of a circle assumed to have an area equivalent to that of the cross-section) is 1.0 to 1,000.0 µm and preferably 5.0 to 100.0 µm.

Although the length of the cellulose fibers contained in the fiber structural body of this embodiment is not particularly limited, as one independent cellulose fiber, the length thereof along the longitudinal direction is 1.0 µm to 5.0 mm. In addition, the average length of the cellulose fibers is 20.0 to 3,600.0 µm as a length-length-weighted average cellulose fiber length. Furthermore, the lengths of the cellulose fibers may have a deviation (in distribution).

In this specification, the cellulose fiber indicates either one independent cellulose fiber or an aggregate of cellulose fibers (such as the form of cotton). In addition, the cellulose fibers may be cellulose fibers (defibrated product) which are defibrated into fibers by a defibrating treatment performed on fibers to be defibrated. In this embodiment, as the fibers to be defibrated, there may be mentioned cellulose fibers entangled or bound together, such as a pulp sheet, paper, waste paper, tissue paper, kitchen paper, a cleaner, a filter, a liquid absorber, an acoustic absorber, a buffer material, a mat, or a corrugated board.

### 1.2. Binding Material

The fiber structural body of this embodiment contains the binding material. The binding material has a function to bind cellulose fibers to each other. The binding material may also have a function other than that to bind the cellulose fibers to each other. In addition, all the binding materials are each not always required to have a specific function. The binding material may be a composite containing a coloring material, an aggregation inhibitor, and/or the like. The binding material may also contain, for example, an organic solvent, a surfactant, a fungicide/antiseptic agent, an antioxidant/UV absorber, and/or an oxygen absorber.

The binding material may impart to the fiber structural body, a function, such as binding between the cellulose fibers, coloring thereof, adhesion or sticking between the fiber structural bodies or between the fiber structural body and another material, and/or flame retardancy of the fiber structural body. In addition, the binding material may also have a function to suppress falling of other functional materials (such as a coloring material) from the fiber structural body.

The binding material contains a resin. As the type of resin, either a natural resin or a synthetic resin may be used, and in addition, the binding material has thermoplasticity. Hence, the binding material is melted by heating to extend between the cellulose fibers, and as a result, the cellulose fibers are likely to be bound to each other.

As the natural resin, for example, there may be mentioned a rosin, a dammar, a mastic, a copal, an amber, a shellac, a dragon's blood, a sandarac, and/or a colophony; those resins may be used alone, or at least two types thereof may be appropriately used in combination; and those mentioned above each may be appropriately modified.

As a thermoplastic resin of the synthetic resins, for example, there may be mentioned an AS resin, an ABS resin, a polypropylene, a polyethylene, a poly(vinyl chloride), a polystyrene, an acrylic resin, a polyester resin, a poly(ethylene terephthalate), a poly(phenylene ether), a poly(butylene terephthalate), a nylon, a polyamide, a polycarbonate, a polyacetal, a poly(phenylene sulfide), or a poly(ether ether ketone).

Furthermore, as the binding material, among the synthetic resins, a biodegradable resin, such as a poly(lactic acid), a poly(butylene succinate), or a poly(hydroxy butyrate), may also be used. Since a biodegradable resin is used, the fiber structural body can be further improved in terms of environmental compatibility.

In addition, the resin may be copolymerized or modified, and as the resin mentioned above, for example, there may be mentioned a styrene-based resin, an acrylic-based resin, a styrene acrylic-based resin, an olefin-based resin, a vinyl chloride-based resin, a polyester-based resin, a polyamide-based resin, a polyurethane-based resin, a poly(vinyl alcohol)-based resin, a vinyl ether-based resin, an N-vinyl-based resin, or a styrene butadiene-based resin. The resins mentioned above by way of example may be used alone, or at least two types thereof may be appropriately used in combination.

The resin contained in the binding material is melted or softened preferably at 200.0°C or less and more preferably at 160.0°C or less in terms of energy saving. A glass transition temperature (Tg) of the resin contained in the binding material may be appropriately selected in accordance with the thickness of the fiber structural body and the temperature for a heat treatment and is preferably 45.0°C or more and more preferably 50.0°C or more. In addition, an upper limit of Tg is preferably 95.0°C or less and more preferably 90.0°C or less. When the glass transition temperature is 45.0°C or more, the softening of the binding material at a high temperature can be suppressed.

The binding material includes a starch which is a natural high molecular weight material. The starch contributes to maintaining the shape of a molded product and, in addition, is a component which maintains and improves the features, such as a strength, of the molded product.

The starch is a high molecular weight material in which α-glucose molecules are polymerized by glycoside bonds. The starch may have either a straight structure or a branched structure.

As the starch, starches derived from various types of plants may be used. As a raw material of the starch, for example, there may be mentioned grains, such as corn, wheat, or rice; beans, such as broad beans, mung beans, or red beans; tubers and roots, such as potatoes, sweet potatoes, or tapiocas; wild grass, such as dogtooth violet, bracken, or kudzu; or palms such as sago palm.

In addition, as the starch, a processed starch or a modified starch may also be used. As the processed starch, for example, there may be mentioned an acetylated distarch adipate, an acetylated starch, an oxidized starch, a starch sodium octenyl succinate, a hydroxypropyl starch, a hydroxypropyl distarch phosphate, a monostarch phosphate, a phosphated distarch phosphate, an urea phosphorylated esterified starch, a sodium starch glycolate, or a high-amylose cornstarch. In addition, as the modified starch, for example, there may be mentioned an α-modified starch, a dextrin, a lauryl polyglucose, a cationized starch, a thermoplastic starch, or a starch carbamate.

The binding material is preferably a powder composed of particles having a volume average particle diameter smaller than the diameter of the cellulose fibers. When the binding material is a powder, the content thereof with respect to the cellulose fibers can be easily changed. In addition, since the binding material is a powder, the uniformity of adhesion to the cellulose fibers is improved. The volume average particle diameter of the binding material is, for example, 1.0 to 100.0 and preferably 5.0 to 50.0 µm.

After kneading is performed, for example, using a kneader, a banbury mixer, a single-screw extruder, a multi-screw extruder, a two-roll mill, a three-roll mill, a continuous kneader, or a continuous two-roll mill, the binding material may be obtained by palletizing using an appropriate method, followed by pulverization. The binding material may contain particles having various sizes in some cases and may be classified using a known classifying device. In addition, an external shape of the particle of the binding material is not particularly limited, and for example, a sphere, a disc, a fiber, and/or an irregular shape may be used.

In this specification, the "binding between the cellulose fibers and the binding material" indicates a state in which the cellulose fibers are not likely to be separated from the binding material or a state in which the binding material is disposed between the cellulose fibers, and the cellulose fibers are not likely to be separated from each other with the binding material interposed therebetween. In addition, the "binding" is a concept including "adhesion" and indicates a state in which at least two types of objects are in contact with each other and are not likely to be separated from each other. In addition, when the cellulose fibers are bound to each other with the binding material interposed therebetween, the cellulose fibers may be disposed in parallel to each other or may be intersected with each other, or a plurality of cellulose fibers may be bound to one cellulose fiber.

In a molded product formed using the fiber structural body of this embodiment, a method for binding between the cellulose fibers is not particularly limited as long as the cellulose fibers can be bound to each other by melting or softening the binding material. As a device which realizes the binding described above, for example, there may be mentioned a heat press, a heat roller, or a three-dimensional molding machine.

A content of the binding material with respect to the fiber structural body is 5.0 to 50.0 percent by mass, preferably 7.0 to 45.0 percent by mass, and more preferably 10.0 to 40.0 percent by mass. When the content of the binding material is in the range described above, in the case in which a molded product is formed using the fiber structural body, sufficient strength/rigidity can be easily obtained, and in addition, even when a three-dimensional shape which requires so-called deep drawing or the like is formed, wrinkles and breakages can be suppressed from being generated in the molded product.

### 1.3. Properties of Fiber Structural Body

A density of a fiber structural body WS is preferably 0.01 to 0.50 g/cm³, more preferably 0.02 to 0.50 g/cm³, and further preferably 0.10 to 0.50 g/cm³. When the density of the fiber structural body WS is in the range described above, in the case in which a molded product is formed using the fiber structural body WS, sufficient strength/rigidity can be easily obtained, and in addition, even when a three-dimensional shape which requires so-called deep drawing or the like is formed, wrinkles and breakages can be further suppressed from being generated in the molded product; hence, for example, the fiber structural body can be easily formed into a buffer material by molding. Furthermore, the strength is maintained, and the durability against impact can also be improved.

The fiber structural body WS may have a sheet-shaped appearance. A thickness of the fiber structural body WS is, for example, 0.5 to 30.0 mm, preferably 1.0 to 20.0 mm, and further preferably 1.5 to 15.0 mm. When the thickness of the structural body WS is set as described above, in the case in which a molded product is formed using the fiber structural body WS, sufficient strength/rigidity can be easily obtained, and in addition, even when a three-dimensional shape which requires so-called deep drawing or the like is formed, wrinkles and breakages can be further suppressed from being generated in the molded product 2. Manufacturing Apparatus for Fiber Structural Body

A manufacturing apparatus for a fiber structural body of this embodiment is an apparatus capable of manufacturing the above fiber structural body.

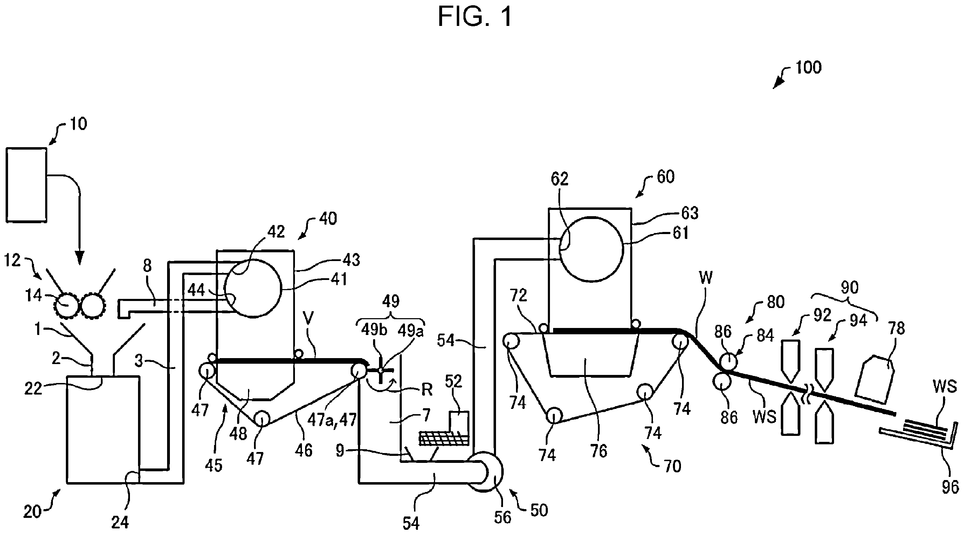

FIG. 1 is a schematic view showing a fiber structural body manufacturing apparatus 100 according to this embodiment. As shown in FIG. 1, the fiber structural body manufacturing apparatus 100 includes a supply portion 10, a coarsely pulverizing portion 12, a defibrating portion 20, a sorting portion 40, a first web forming portion 45, a rotation body 49, a mixing portion 50, a depositing portion 60, a second web forming portion 70, a fiber structural body forming portion 80, a cutting portion 90, and a humidifying portion 78.

The supply portion 10 supplies a raw material to the coarsely pulverizing portion 12. The supply portion 10 is, for example, an automatic feeder which continuously feeds the raw material to the coarsely pulverizing portion 12. As the raw material supplied to the coarsely pulverizing portion 12, any material containing cellulose fibers may be used.

The coarsely pulverizing portion 12 cuts the raw material supplied by the supply portion 10 into small pieces in a gas atmosphere, such as in the air (air). The small pieces each have, for example, a several centimeters square shape. In the example shown in the drawing, the coarsely pulverizing portion 12 includes at least one coarsely pulverizing blade 14, and by this coarsely pulverizing blade 14, the raw material thus supplied can be cut into small pieces. As the coarsely pulverizing portion 12, for example, a shredder may be used. After being received by a hopper 1, the raw material cut by the coarsely pulverizing portion 12 is fed (transported) to the defibrating portion 20 through a tube 2.

The defibrating portion 20 defibrates the raw material cut in the coarsely pulverizing portion 12. In this case, the "defibrate" indicates that the raw material (material to be defibrated) composed of cellulose fibers bound to each other is disentangled into separately independent cellulose fibers. The defibrating portion 20 may also have a function to separate substances, such as resin particles, an ink, a toner, a filler, and a blurring inhibitor, each of which is adhered to the raw material, from the cellulose fibers.

A material passing through the defibrating portion 20 is called a "defibrated material". In the "defibrated material", besides the defibrated cellulose fibers thus disentangled, resin particles (resin particles functioning to bind cellulose fibers together), coloring materials, such as an ink, a toner, and a filler; and additives, such as a blurring inhibitor and a paper reinforcing agent, which are separated from the cellulose fibers when the cellulose fibers are disentangled, may also be contained in some cases.

The defibrating portion 20 performs dry defibration. A treatment, such as defibration, which is performed not in a liquid, such as in water, (wet type, dissolved to form a slurry) but in a gas, such as in the air, is called a dry type. As the defibrating portion 20, in this embodiment, an impellor mill is used. The defibrating portion 20 has a function to generate an air stream which sucks the raw material and discharges the defibrated material. Accordingly, the defibrating portion 20 sucks the raw material from an inlet port 22 together with the air stream generated thereby, then performs a defibrating treatment, and subsequently transports the defibrated material to a discharge port 24. The defibrated material passing through the defibrating portion 20 is transferred to the sorting portion 40 through a tube 3. In addition, as an air stream transporting the defibrated material from the defibrating portion 20 to the sorting portion 40, the air stream generated by the defibrating portion 20 may also be used, or an air generating device, such as a blower, may be provided, and an air stream generated thereby may be used.

The defibrated material defibrated in the defibrating portion 20 flows into the sorting portion 40 through an inlet port 42 and is sorted in accordance with the length of the cellulose fibers. The sorting portion 40 includes a drum section 41 and a housing section 43 receiving the drum section 41. As the drum section 41, for example, a sieve is used. The drum section 41 includes a net (a filter or a screen), and cellulose fibers and particles (which pass through the net, first sorted material) smaller than each of the openings of the net may be separated from cellulose fibers, non-defibrated pieces, and damas (which are not allowed to pass through the net, second sorted material) larger than each of the openings of the net. For example, the first sorted material is transported to the mixing portion 50 through a tube 7. The second sorted material is returned to the defibrating portion 20 from a discharge port 44 through a tube 8. In particular, the drum section 41 is a cylindrical sieve which is rotatably driven by a motor. As the net of the drum section 41, for example, there may be used a metal net, an expanded metal obtained by expanding a metal plate having cut lines, or a punched metal obtained by forming holes in a metal plate using a press machine or the like.

The first web forming portion 45 transports the first sorted material passing through the sorting portion 40 to the mixing portion 50. The first web forming portion 45 includes a mesh belt 46, tension rollers 47, and a suction section (suction mechanism) 48.

The suction section 48 is able to suck the first sorted material, which passes through the openings (openings of the net) of the sorting portion 40 and which is dispersed in air, on the mesh belt 46. The first sorted material is deposited on the moving mesh belt 46 to form a web V. The basic structures of the mesh belt 46, the tension rollers 47, and the suction section 48 are similar to those of a mesh belt 72, tension rollers 74, and a suction mechanism 76 of the second web forming portion 70, respectively.

Since passing through the sorting portion 40 and the first web forming portion 45, the web V is formed in a softly expanded air-rich state. The web V deposited on the mesh belt 46 is charged to the tube 7 and then transported to the mixing portion 50.

The rotation body 49 is able to cut the web V before the web V is transported to the mixing portion 50. In the example shown in the drawing, the rotation body 49 includes a base portion 49a and projecting portions 49b projecting from the base portion 49a. The projecting portion 49b has, for example, a plate shape. In the example shown in the drawing, the four projecting portions 49b are provided at regular angular intervals. As the base portion 49a is rotated in a direction R, the projecting portions 49b are able to rotate around the base portion 49a. Since the web V is cut by the rotation body 49, for example, the variation of the amount of the defibrated material per unit time supplied to the depositing portion 60 can be reduced.

The rotation body 49 is provided in the vicinity of the first web forming portion 45. In the example shown in the drawing, the rotation body 49 is provided in the vicinity (adjacent to a tension roller 47a) of the tension roller 47a located downstream of the path for the web V. The rotation body 49 is provided at a position at which the projecting portion 49b is able to be in contact with the web V and not to be in contact with the mesh belt 46 on which the web V is deposited. The minimum distance between the projecting portion 49b and the mesh belt 46 is, for example, 0.05 to 0.5 mm.

The mixing portion 50 mixes the first sorted material (the first sorted material transported by the first web forming portion 45) passing through the sorting portion 40 and an additive including the binding material. The mixing portion 50 includes an additive supply section 52 supplying the additive, a tube 54 transporting the first sorted material and the additive, and a blower 56. In the example shown in the drawing, the additive is supplied to the tube 54 from the additive supply section 52 through a hopper 9. The tube 54 is extended from the tube 7.

In the mixing portion 50, an air stream is generated by the blower 56, and the first sorted material and the additive can be transported in the tube 54 while being mixed together. In addition, a mechanism of mixing the first sorted material and the additive is not particularly limited, and the mixing may be performed by stirring using at least one high speed rotating blade or using a rotational container, such as a V-shaped mixer.

As the additive supply section 52, for example, a screw feeder as shown in FIG. 1 or a disc feeder now shown may be used. The additive supplied from the additive supply section 52 includes the binding material described above. When the binding material is supplied, the cellulose fibers are not yet bound together. The binding material is partially melted when passing through the fiber structural body forming portion 80, so that cellulose fibers in a surface region of the fiber structural body WS are bound together.

In addition, in the additive supplied from the additive supply section 52, besides the binding material, in accordance with the type of fiber structural body WS to be manufactured, a coloring agent coloring the cellulose fibers, an aggregation suppressor suppressing aggregation of the cellulose fibers and aggregation of the binding material, and a flame retardant which renders the cellulose fibers or the like difficult to burn may also be included. A mixture (mixture of the first sorted material and the additive) passing through the mixing portion 50 is transported to the depositing portion 60 through the tube 54.

In the depositing portion 60, the mixture passing through the mixing portion 50 is introduced from an inlet port 62, and an entangled defibrated material (cellulose fibers) is disentangled and is allowed to fall down while being dispersed in air. Accordingly, in the depositing portion 60, the mixture can be uniformly deposited on the second web forming portion 70.

The depositing portion 60 includes a drum section 61 and a housing section 63 receiving the drum section 61. As the drum section 61, a rotatable cylindrical sieve is used. The drum section 61 includes a net and allows cellulose fibers and particles (which pass through the net), the size of which is smaller than the openings of the net, contained in the mixture passing through the mixing portion 50 to fall down. The structure of the drum section 61 is, for example, the same as that of the drum section 41.

In addition, the "sieve" of the drum section 61 may have no function to sort a specific object. That is, the "sieve" used as the drum section 61 indicates a section including a net, and the drum section 61 may allow all the mixture introduced in the drum section 61 to fall down.

The second web forming portion 70 deposits a material passing through the depositing portion 60 to form a web W which is a deposit to be formed into the fiber structural body WS. In this case, a molding die (not shown) is placed on the mesh belt to function as a saucer, so that the web can be formed in the molding die. The second web forming portion 70 includes, for example, the mesh belt 72, the tension rollers 74, and the suction mechanism 76.

While the mesh belt 72 moves, a material passing through the openings (openings of the net) of the depositing portion 60 is deposited in the molding die. The mesh belt 72 and the molding die are suspended by the tension rollers 74 and are configured to allow air to pass but not to allow the material thus deposited to easily pass. The mesh belt 72 moves as the tension rollers 74 rotate. While the mesh belt 72 continuously moves, since the material passing through the depositing portion 60 continuously falls and deposits, the web W is formed in the molding die on the mesh belt 72. The mesh belt 72 and the molding die are each composed of, for example, a metal, a resin, a cloth, or a non-woven cloth.

The suction mechanism 76 is provided under the mesh belt 72 (opposite to a depositing portion 60 side). The suction mechanism 76 can generate a downward air stream (air stream from the depositing portion 60 to the mesh belt 72). By the suction mechanism 76, a mixture dispersed in air by the depositing portion 60 can be sucked on the mesh belt 72. Accordingly, a discharge rate from the depositing portion 60 can be increased. Furthermore, by the suction mechanism 76, a downflow can be formed in a falling path of the mixture, and the defibrated material and the additive are suppressed from being entangled together during the falling.

As described above, by the depositing portion 60 and the second web forming portion 70 (web forming step), the web W is formed in a softly expanded air-rich state. The web W deposited in the molding die on the mesh belt 72 is transported to the fiber structural body forming portion 80. The thickness of the web W (deposit) transported to the fiber structural body forming portion 80 is preferably 1.0 to 150.0 mm, more preferably 2.0 to 120.0 mm, and further preferably 5.0 to 100.0 mm. In addition, the density of the web W (deposit) is 0.02 to 0.05 g/cm³ and preferably 0.02 to 0.03 g/cm³.

The fiber structural body forming portion 80 heats the web W deposited in the molding die on the mesh belt 72 to form the fiber structural body WS. In the fiber structural body forming portion 80, the deposit (web W) of the mixture of the defibrated material and the additive mixed therewith is heated, so that the binding material can be melted. By the molten binding material, the cellulose fibers may be bound to each other.

The fiber structural body forming portion 80 includes a heating section 84 heating the web W. As the heating section 84, for example, a heat press or a heating roller (heater roller) may be used, and hereinafter, an example of using at least one heating roller (heater roller) will be described. The number of the heating rollers of the heating section 84 is not particularly limited. In the example shown in the drawing, the heating section 84 includes a pair of heating rollers 86. Since the heating section 84 is formed using the heating rollers 86, while the web W is continuously transported, the fiber structural body WS can be formed. The heating rollers 86 are disposed such that, for example, the rotation shafts thereof are in parallel to each other. The roller radius of the heating roller 86 is, for example, 2.0 to 5.0 cm, preferably 2.5 to 4.0 cm, and more preferably 2.5 to 3.5 cm.

While being brought into contact with the heating rollers 86 and sandwiched therebetween, the web W is transported and heated by the heating rollers 86. A rotation rate of the heating roller 86 is, for example, 20.0 to 500.0 rpm, preferably 30.0 to 350.0 rpm, and more preferably 50.0 to 300.0 rpm. When the rotation rate of the heating roller 86 is as described above, the surface region of the web W can be sufficiently and uniformly heated.

The heating rollers 86 sandwich and transport the web W to form a fiber structural body WS having a predetermined thickness. In this step, the pressure applied to the web W by the heating rollers 86 is preferably 0.1 to 10.0 MPa and more preferably 0.5 to 7.0 MPa.

A surface temperature of the heating roller 86 when the web W is heated is appropriately set in consideration of Tg and the melting point of a resin contained in the binding material and is, for example, 60.0°C to 250.0°C, preferably 70.0°C to 220.0°C, and more preferably 80.0°C to 200.0°C. When the surface temperature of the heating roller 86 is set in the range as described above, the surface of the web W (deposit) can be heated in the temperature range described above.

A gap between the pair of heating rollers 86 of the heating section 84 is preferably adjusted so that the thickness of the fiber structural body WS is 1.0 to 20.0 mm, preferably 2.0 to 18.0 mm, and more preferably 3.0 to 15.0 mm, and the density of the fiber structural body WS is 0.02 to 0.50 g/cm³ and preferably 0.03 to 0.30 g/cm³.

By the fiber structural body manufacturing apparatus 100 according to this embodiment, the fiber structural body WS of this embodiment can be manufactured as described above.

The fiber structural body manufacturing apparatus 100 of this embodiment may further include the cutting portion 90, if needed. In the example shown in the drawing, the cutting portion 90 is provided downstream of the heating section 84. The cutting portion 90 cuts the molding die including the fiber structural body WS formed by the fiber structural body forming portion 80. In the example shown in the drawing, the cutting portion 90 includes a first cutting section 92 which cuts the molding die including the fiber structural body WS in a direction intersecting the transport direction of the fiber structural body WS and a second cutting section 94 which cuts the fiber structural body WS in a direction parallel to the transport direction. The second cutting section 94 cuts, for example, the molding die including the fiber structural body WS which passes through the first cutting section 92.

In addition, the fiber structural body manufacturing apparatus 100 of this embodiment may further include the humidifying portion 78. In the example shown in the drawing, the humidifying portion 78 is provided downstream of the cutting portion 90 and upstream of a discharge portion 96. The humidifying portion 78 can supply water or vapor to the fiber structural body WS. As a concrete mode of the humidifying portion 78, for example, there may be mentioned a mode in which mist of water or an aqueous solution is sprayed, a mode in which water or an aqueous solution is sprayed, or a mode in which water or an aqueous solution is ejected from an ink jet head for adhesion.

Since the fiber structural body manufacturing apparatus 100 includes the humidifying portion 78, the fiber structural body WS thus formed may contain moisture. Accordingly, the cellulose fibers are wetted and softened. Hence, when a three-dimensional container is formed using the fiber structural body WS, wrinkles and breakages are more unlikely to be generated. In addition, since the fiber structural body WS contains moisture, hydrogen bonds are likely to be formed between the cellulose fibers; hence, the density of the molded product is increased, and for example, the strength thereof can be improved.

In the example shown in FIG. 1, although the humidifying portion 78 is provided downstream of the cutting portion 90, as long as the humidifying portion 78 is provided downstream of the heating section 84, the same effect as described above can be obtained. That is, the humidifying portion 78 may also be provided downstream of the heating section 84 and upstream of the cutting portion 90.

Accordingly, when the fiber structural body WS formed in the molding die is simply released therefrom, for example, a three-dimensional molded product having a convex shape may be obtained.

### 3. Examples and Comparative Examples

Hereinafter, although the present disclosure will be further described with reference to examples and comparative examples, the present disclosure is not limited to the following examples.

### 3.1. Formation of Molded Product

Copy paper (trade name: GR70) manufactured by Fuji Xerox Co., Ltd, was defibrated as waste paper by a defibrating machine (Disc Refiner, manufactured by Aikawa Iron Works Co., Ltd.). The defibrated fibers, a shellac resin powder made in China as a binding material, and a thermoplastic starch manufactured in accordance with JP-T-5-501686 were mixed together to form the composition shown in Table 1 and were than molded using the manufacturing apparatus described above. When a molded product was obtained as designed by the molding die, the moldability was evaluated as moldable.

**Table 1**

| | CELLULOSE (PERCENT BY MASS) | SHELLAC (PERCENT BY MASS) | THERMOPLASTIC STARCH (PERCENT BY MASS) | MOLDABILITY |
|---|---|---|---|---|
| EXAMPLE 1 | 70 | 30 | 0 | MOLDABLE |
| EXAMPLE 2 | 70 | 20 | 10 | MOLDABLE |
| EXAMPLE 3 | 50 | 50 | 0 | MOLDABLE |
| COMPARATIVE EXAMPLE 1 | 90 | 20 | 0 | NOT MOLDABLE |
| COMPARATIVE EXAMPLE 2 | 40 | 60 | 0 | IRREGULARLY MOLDED |

### 3.2. Evaluation of Elastic Modulus (Young's Modulus) and Bending Test

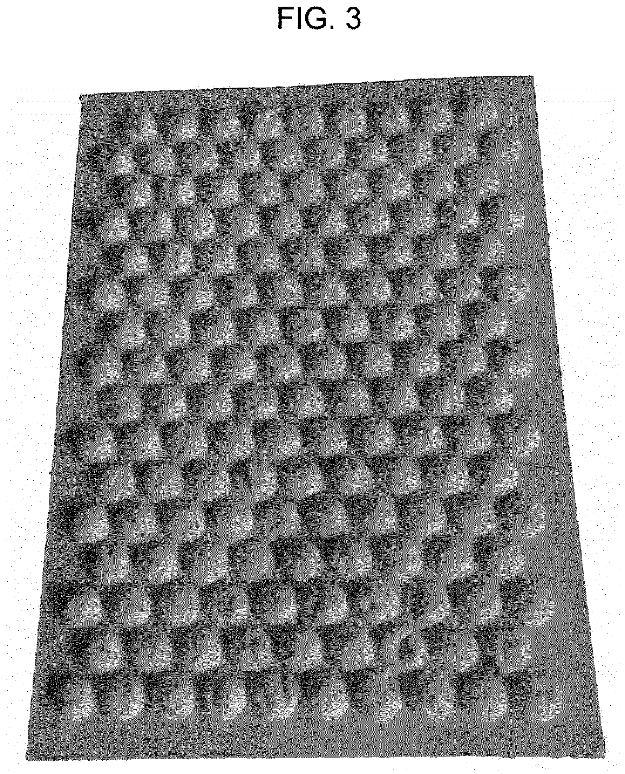

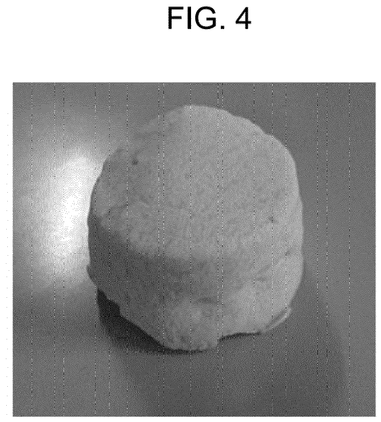

By using a sample shape (FIGs. 3 and 4) of the molded product obtained in each example, an elastic modulus (Young's modulus) evaluation test was performed using an universal tester. The evaluation results are shown in Table 2.

**Table 2**

| | LOAD (N) | CROSS-SECTIONAL AREA (mm²) | LENGTH (mm) | DEFORMATION (mm) | ELASTIC MODULUS (YOUNG'S MODULUS) (Mpa) |
|---|---|---|---|---|---|
| EXAMPLE 1 | 5.765 | 2463 | 30 | 3.324 | 0.021 |
| EXAMPLE 2 | 11.156 | 1000 | 15 | 1.573 | 0.106 |
| COMPARATIVE EXAMPLE 1 | 21.48 | 1178 | 3.754 | 1.981 | 0.035 |
| COMPARATIVE EXAMPLE 2 | 8.31 | 988 | 20.513 | 10.244 | 0.017 |

As shown in Tables 1 and 2, the fiber structural body contained the cellulose fibers and the binding material which bound the above cellulose fibers, the content of the cellulose fibers with respect to the fiber structural body was 50.0 to 70.0 percent by mass, and the binding material was a natural component; hence, it was found that the moldability was excellent, and a molded product having a buffer effect could be obtained. As Reference Example 1, results obtained from 15 commercially available convex portions formed of a poly(vinyl chloride) (convex three-dimensional buffer materials) are shown, and as Reference Example 2, results obtained from one convex portion described above are shown. It was found that characteristics equal or superior to those of Reference Examples were obtained.

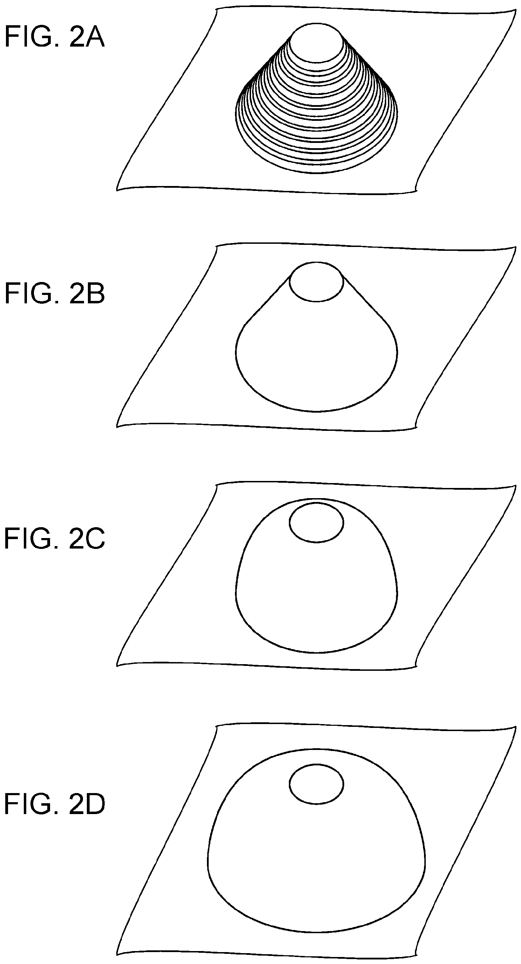

In addition, FIGs. 2A, 2B, 2C, and 2D each show one example of a shape used for the molding die. Since a three-dimensional shape, such as a cannon ball shape, a hemispherical shape, a long elliptic shape, a speaker shape, a cylindrical shape, a corn shape, or a stair corn shape, having a convex portion is able to withstand an impact, the shape may be arbitrarily changed.

The present disclosure is not limited to the embodiments described above and may be variously changed or modified. For example, the present disclosure includes substantially the same structure as the structure described in the embodiment. That is, the substantially the same structure includes, for example, the structure in which the function, the method, and the result are the same as those described above, or the structure in which the object and the effect are the same as those described above. In addition, the present disclosure includes the structure in which a nonessential portion of the structure described in the embodiment is replaced with something else. In addition, the present disclosure includes the structure which performs the same operational effect as that of the structure described in the embodiment or the structure which is able to achieve the same object as that of the structure described in the embodiment. In addition, the present disclosure includes the structure in which a known technique is added to the structure described in the embodiment.

## Claims

1. A fiber structural body comprising:
cellulose fibers; and
a binding material which binds the cellulose fibers,
wherein the cellulose fibers are contained at a content of 50.0 to 70.0 percent by mass with respect to the fiber structural body, and
the binding material is a natural component.

2. The fiber structural body according to claim 1,
wherein the binding material includes a shellac resin.

3. The fiber structural body according to claim 1,
wherein the binding material includes a thermoplastic starch.

4. The fiber structural body according to claim 1,
wherein the fiber structural body has a thickness of 1.0 to 20.0 mm and a density of 0.02 to 0.50 g/cm³.

5. A manufacturing apparatus for a fiber structural body, comprising:
a mixing portion of mixing cellulose fibers and a binding material which binds the cellulose fibers;
a depositing portion of depositing the cellulose fibers and the binding material which are mixed together; and
a forming portion of heating a deposit deposited in the depositing portion to form a fiber structural body,
wherein the forming portion includes a heating section and a pressurizing section.

6. The manufacturing apparatus for a fiber structural body, according to claim 5,
wherein the heating section increases a heating temperature to 140°C to less than 200°C.

7. The manufacturing apparatus for a fiber structural body, according to claim 5, wherein the pressurizing section increases a pressure to 0.1 kPa to 10.0 MPa.
